# EUROPEAN PATENT SPECIFICATION

(11) **EP 0 598 496 B1**
(45) Date of publication and mention of the grant of the patent: **03.01.2001**
(21) Application number: 93308371.9
(22) Date of filing: 20.10.1993
(51) Int. Cl.: H04N 9/88

(54) **Frequency drop-out compensation**
Kompensation von Frequenzausfall
Compensation de perte du signal de fréquence

(30) Priority: 22.10.1992 KR 9219425
(43) Date of publication of application: 25.05.1994
(73) Proprietor: SAMSUNG ELECTRONICS CO., LTD., Suwon-City, Kyungki-do (KR)
(72) Inventor: Kim, Cheon-seob, Paldal-gu, Suwon-city, Kyunggi-do (KR)
(74) Representative: Stanley, David William

(56) References cited:
- GB-A- 2 231 462
- US-A- 5 117 193
- PATENT ABSTRACTS OF JAPAN vol. 012, no. 440 (E-684)18 November 1988 & JP-A-63 172 582 (MATSUSHITA) 16 July 1988
- PATENT ABSTRACTS OF JAPAN vol. 012, no. 440 (E-684)18 November 1988 & JP-A-63 172 583 (MATSUSHITA) 16 July 1988
- PATENT ABSTRACTS OF JAPAN vol. 12, no. 407 (E-675)27 October 1988 & JP-A-63 146 580 (SONY) 18 June 1988
- IEEE TRANSACTIONS ON CONSUMER ELECTRONICS vol. 37, no. 3 , August 1991 , NEW YORK US pages 237 - 243 XP263191 SATOMI ET AL. 'Video signal processing LSI for home VCR'

## Description

The present invention relates to frequency drop-out compensation in an optical disk system.

In general, an optical disk system such as a laser disk system has been well regarded as an apparatus for recording large quantities of information, with many advantages. The optical disk system enables audio and video signals to be recorded in high density and then reproduced, while exhibiting a much better random access function than other recording systems for audio/video data. Also, due to the use of a reflected laser beam for reading the signal to be reproduced, neither the disk nor pickup head become worn because they have no contact with each other.

However, such a laser disk system has a disadvantage in that signal errors or a temporary fall in output level may occur due to minor defects, dust or bugs in the recording medium, i.e. an optical disk.

Therefore, an optical disk system usually adopts one of two methods for the compensation of drop-out - an amplitude drop-out compensating method or a frequency drop-out compensating method. The amplitude drop-out compensating method is mainly to compensate an abrupt decrease of the level of an input FM signal due to imperfections in the reproduced signal by disk damage or bug. The frequency drop-out compensating method is to compensate a deviation of the frequency of an input FM signal due to partial loss of data by disk corrosion or a defect of the disk generated when manufacturing.

Apparatus for detecting a frequency dropout of an input signal has previously been disclosed in Patent Abstracts Of Japan, Vol 12, No. 440 (E684), JP-A-63 172 582 and JP-A-63 172 583.

In particular, the frequency drop-out compensating method does not demonstrate compatibility since different compensating circuits are used for different television broadcasting systems. For example, a frequency drop-out compensating circuit used for NTSC (National Television System Committee) broadcasting standard systems can compensate a frequency drop-out for a signal of an NTSC system, but cannot compensate a frequency drop-out for a signal of other broadcasting systems.

Therefore, for an optical disk system for use with both NTSC and PAL (Phase Alternation by Line) broadcasting standard systems, separate frequency drop-out compensating circuits (one for NTSC and one for PAL) should be provided and selectively switched to be used. Thus, the circuit configuration is more complex and the cost is higher.

Preferred embodiments of the present invention aim to provide a frequency drop-out compensating method for use with both NTSC and PAL systems for detecting and compensating a frequency drop-out by varying a detecting reference frequency according to the change of an integrating current depending whether a system is an NTSC or a PAL systems.

Another aim is to provide a frequency drop-out compensating circuit for use with both NTSC and PAL systems, which is most appropriate in performing the above frequency drop compensating method.

According to one aspect of the present invention, there is provided
a frequency dropout compensating method for both first and second broadcast standards in an optical disk system, comprising the steps of:
determining whether an applied FM signal is a signal of the first or second standard;
detecting a frequency dropout with a frequency dropout detector (40) using integrating means (41) having first to fourth transistors (Q1 to Q4) and first to fourth resistors (R1 to R4) to integrate said applied FM signal and thereby detect the frequency dropout;
characterised by varying the current supply to the integrating means (41) in accordance with the broadcast standard determined in the determining step,
the current supply being varied by an integrating current controlling means (42), which comprises a fifth transistor (Q5) whose base is connected with the base of a seventh transistor (Q7), whose collector is connected with a power supply voltage terminal (Vcc) through a fifth resistor (R5), and whose emitter is grounded through a sixth resistor (R6), a sixth transistor (Q6) whose base is connected with the collector of the fifth transistor (Q5), whose collector is tied to the power supply voltage terminal (Vcc), and whose emitter is connected with the base of the fifth transistor (Q5), the base of the seventh transistor (Q7) being grounded through a seventh resistor (R7), the collector of the seventh transistor being connected to supply current to said integrating means (41) the emitter of the seventh transistor being grounded through an eighth resistor (R8), an eighth PMOS transistor (Q8) whose source is common with the substrate and connected with the power supply voltage terminal (Vcc) and whose gate is tied to its drain, a ninth transistor (Q9) whose base is connected with the base of the seventh transistor (Q7), whose collector is connected with the drain of the eighth PMOS transistor (Q8), and whose emitter is grounded through a ninth resistor (R9), a tenth PMOS transistor (Q10) whose source is common with the substrate and connected with the power supply voltage terminal (Vcc) and whose gate is connected with the gate of the eighth PMOS transistor (Q8), an eleventh transistor (Q11) whose base is grounded through an eleventh resistor (R11). whose collector is connected with the drain of the tenth PMOS transistor (Q10), and whose emitter is grounded through a tenth resistor (R10), a twelfth transistor (Q12) whose base is connected with the collector of the eleventh transistor (Q11), whose collector is tied to the power supply voltage terminal (Vcc), and whose emitter is connected with the base of the eleventh transistor (Q11), a thirteenth transistor (Q13) whose base is connected with the emitter of the twelfth transistor (Q12), whose collector is connected with the collector of the seventh transistor (Q7), and whose emitter is grounded through a twelfth resistor (R12), and a fourteenth transistor (Q14) whose base is connected with a broadcast standard control signal input terminal through a resistor (R13), whose collector is connected with the base of the twelfth transistor (Q12), and whose emitter is grounded, said step of varying the integrator current comprising setting the broadcast standard control signal either high or low, so that the current supplied to said integrating means (41) is either the collector current of said seventh transistor alone, or the sum of said collector current and the collector current of said thirteenth transistor, respectively; and further comprising the step of
compensating the frequency dropout with a dropout compensator (60) by supplying a substitute signal.

According to another aspect of the present invention there is provided
a frequency dropout compensating circuit for both first and second broadcast standards, comprising:
amplifying means (10, 20, 30) for amplifying an applied FM signal;
a frequency dropout detector (40) for detecting a frequency dropout in the applied FM signal, comprising integrating means (41) having first to fourth transistors (Q1 to Q4) and first to fourth resistors (R1 to R4) for integrating the FM signal generated from said amplifying means (10, 20, 30),
pulse generating means (50) for converting the frequency dropout signal detected from said amplified FM signal by said dropout detector (40) into a pulse signal;
dropout compensating means (60) for compensating a dropout when a frequency dropout for the signal generated from said pulse generating means (50) occurs;
the circuit being characterised in that it comprises integrating current controlling means (42) for controlling an integrating current in said integrating means (41), in accordance with which of said standards is to be dropout compensated by said circuit,
the integrating current controlling means comprising a fifth transistor (Q5) whose base is connected with the base of a seventh transistor (Q7), whose collector is connected with a power supply voltage terminal (Vcc) through a fifth resistor (R5), and whose emitter is grounded through a sixth resistor (R6), a sixth transistor (Q6) whose base is connected with the collector of the fifth transistor (Q5), whose collector is tied to the power supply voltage terminal (Vcc), and whose emitter is connected with the base of the fifth transistor (Q5), the base of the seventh transistor (Q7) being grounded through a seventh resistor (R7), the collector of the seventh transistor being connected to supply current to said integrating means (41), the emitter of the seventh transistor being grounded through an eighth resistor (R8), an eighth PMOS transistor (Q8) whose source is common with the substrate and connected with the power supply voltage terminal (Vcc) and whose gate is tied to its drain, a ninth transistor (Q9) whose base is connected with the base of the seventh transistor (Q7), whose collector is connected with the drain of the eighth PMOS transistor (Q8), and whose emitter is grounded through a ninth resistor (R9), a tenth PMOS transistor (Q10) whose source is common with the substrate and connected with the power supply voltage terminal (Vcc) and whose gate is connected with the gate of the eighth PMOS transistor (Q8), an eleventh transistor (Q11) whose base is grounded through an eleventh resistor (R11), whose collector is connected with the drain of the tenth PMOS transistor (Q10), and whose emitter is grounded through a tenth resistor (R10), a twelfth transistor (Q12) whose base is connected with the collector of the eleventh transistor (Q11), whose collector is tied to the power supply voltage terminal (Vcc), and whose emitter is connected with the base of the eleventh transistor (Q11), a thirteenth transistor (Q13) whose base is connected with the emitter of the twelfth transistor (Q12), whose collector is connected with the collector of the seventh transistor (Q7), and whose emitter is grounded through a twelfth resistor (R12), and a fourteenth transistor (Q14) whose base is connected with a broadcast standard control signal input terminal through a resistor (R13), whose collector is connected with the base of the twelfth transistor (Q12), and whose emitter is grounded.

Preferably, said first standard is the NTSC standard.

Preferably, said second standard is the PAL standard.

The invention extends to an optical disk system provided with a circuit according to any of the preceding aspects of the invention.

The invention extends to an optical disk system which, in use, performs a frequency dropout method according to any of the preceding aspects of the invention.

For a better understanding of the invention, and to show how the same may be carried into effect, reference will now be made, by way of example, to the accompanying diagrammatic drawings, in which:
Figure 1 is a block diagram of one example of a frequency drop-out compensating circuit according to the present invention;
Figure 2 is a schematic diagram of a frequency drop-out detector shown in Figure 1;
Figure 3 is a more detailed circuit diagram showing the frequency drop-out detector of Figures 1 and 2; and
Figures 4A and 4B are waveform diagrams for comparing the FM bands of NTSC and PAL systems.

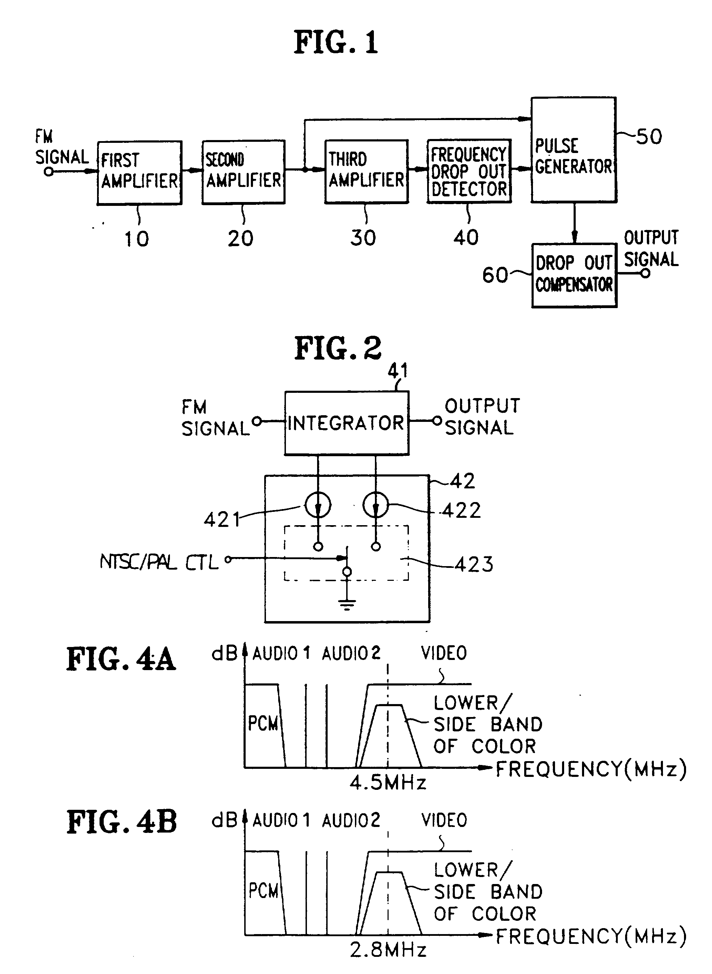

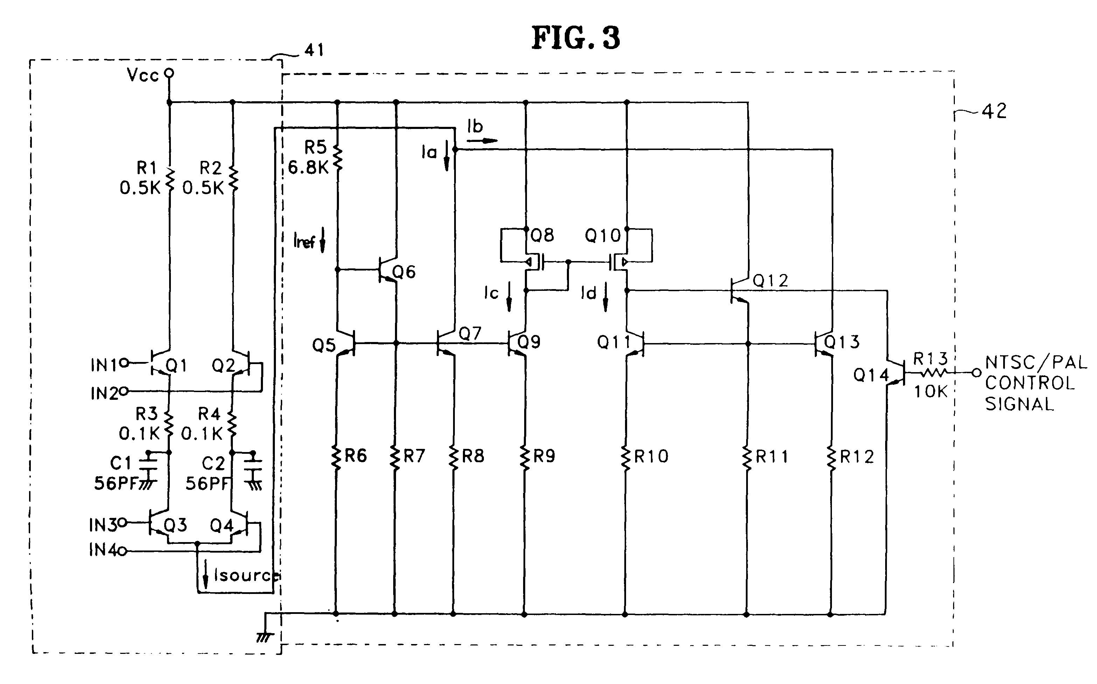

The circuit of Figure 1 includes first, second and third amplifiers 10, 20 and 30 for amplifying an applied FM signal, a frequency drop-out detector 40 for detecting the frequency drop-out from the signal generated from third amplifier 30, a pulse generator 50 for generating a corresponding pulse by receiving the signals generated from frequency drop-out detector 40 and second amplifier 20, and a drop-out compensator 60 for substituting a 1H prior signal for the original signal in the case of a frequency drop-out occurring in the signal generated from pulse generator 50.

Figure 2 is a schematic diagram of the frequency drop-out detector 40 shown in Figure 1. The frequency drop-out detector 40 includes an integrator 41 for integrating the signal generated from third amplifier 30 and an integrating current controller 42 for controlling the integrating current of the integrator 41 in accordance with an NTSC or PAL system.

The integrating current controller 42 has a current source 421 for supplying the integrating current of integrator 41 to the signal of an NTSC system, a current source 422 for supplying the integrating current of integrator 41 to the signal of a PAL system, and a switch 423 for switching current sources 421 and 422.

In Figure 3, which is a detailed circuit diagram showing the frequency drop-out detector shown in Figure 1, integrator 41 comprises a first transistor Q1 whose base is connected with a first input terminal IN1 and whose collector is connected with a power supply voltage Vcc terminal through resistor R1, a second transistor Q2 whose base is connected with a second input terminal IN2 and whose collector is connected with the Vcc terminal through resistor R2, a third transistor Q3 whose base is connected with a third input terminal IN3 and whose collector is connected with the emitter of first transistor Q1 through resistor R3, a fourth transistor Q4 whose base is connected with a fourth input terminal IN4, whose collector terminal is connected with the emitter of second transistor Q2 through resistor R4, and whose emitter is connected with the emitter of third transistor Q3, a capacitor Cl connected between the collector of third transistor Q3 and ground, and a capacitor C2 connected between the collector of fourth transistor Q4 and ground.

Integrating current controller 42 comprises a fifth transistor Q5 whose base is connected with the base of a seventh transistor Q7, whose collector is connected with the Vcc terminal through resistor R5, and whose emitter is grounded through resistor R6, a sixth transistor Q6 whose base is connected with the collector of fifth transistor Q5, whose collector is tied to the Vcc terminal, and whose emitter is connected with the base of fifth transistor Q5, the seventh transistor Q7 whose base is grounded through resistor R7, whose collector is connected with the emitter of fourth transistor Q4, and whose emitter is grounded through resistor R8, an eighth PMOS transistor Q8 whose source is common with the substrate and connected with the Vcc terminal and whose gate is tied to its drain, a ninth transistor Q9 whose base is connected with the base of seventh transistor Q7, whose collector is connected with the drain of eighth PMOS transistor Q8, and whose emitter is grounded through resistor R9, a tenth PMOS transistor Q10 whose source is common with the substrate and connected with the Vcc terminal and whose gate is connected with gate of eighth PMOS transistor Q8, an eleventh transistor Q11 whose base is grounded through resistor R11, whose collector is connected with the drain of tenth PMOS transistor Q10, and whose emitter is grounded through resistor R10, a twelfth transistor Q12 whose base is connected with the collector of eleventh transistor Q11, whose collector is tied to the Vcc terminal, and whose emitter is connected with base of eleventh transistor Q11, a thirteenth transistor Q13 whose base is connected with the emitter of twelfth transistor Q12, whose collector is connected with the collector of seventh transistor Q7, and whose emitter is grounded through resistor R12, and a fourteenth transistor Q14 whose base is connected with an NTSC/PAL control signal input terminal through resistor R13, whose collector is connected with the base of twelfth transistor Q12, and whose emitter is grounded.

In Figures 4A and 4B which are waveform diagrams for comparing the bands of an FM signal for an NTSC system and PAL system, respectively, the bands are divided into a band in which a digital audio signal is loaded as a pulse code modulation (PCM) signal, left and right analog audio signal bands and a video signal band. In Figure 4A which is a waveform diagram of the band of an FM signal for an NTSC system, an audio subcarrier is frequency-modulated to 2.3MHz and 2.8MHz in the audio signal band. The peak frequency of a white signal in the video signal band is modulated to 9.3MHz, the blanking level is modulated to 8.1MHz and the sync tip level is modulated to 7.6MHz. The mid-frequency of lower/side band of color is 4.5MHz. In Figure 4B which is a waveform diagram of the band of an FM signal for an PAL system, an audio subcarrier is frequency-modulated to 0.673MHz and 1.066MHz in the audio signal band. The peak frequency of a white signal in the video signal band is modulated to 7.9MHz, the blanking level is modulated to 7.1MHz and the sync tip level is modulated to 6.76MHz. The mid-frequency of lower/side band of color is 2.8MHz.

An example of the operation of the illustrated embodiment of the present invention will now be described in detail hereinafter by DC and AC interpretations of Figure 3.

First, for DC interpretation, assume that R1, R2 and R6 are 0.5KΩ, R3 and R4 are 0.1KΩ, R5 is 6.8KΩ, R7 and R11 are 15KΩ, R8 is 1KΩ, R9, R10 and R12 are 1.5KΩ, R13 is 10KΩ, and C1 and C2 are 56pF.${\text{I}}_{\text{ref}} \text{=} \frac{{\text{Vcc-V}}_{\text{BE}} {\text{(Q6) - V}}_{\text{BE}} \text{(Q5)}}{\text{R5+R6}} \text{=} \frac{\text{(5-0.7) - 0.7}}{\text{6.8K+0.5K}} \text{= 493µA}$${\text{I}}_{\text{a}} {\text{= I}}_{\text{ref}} \text{×} \frac{\text{R6}}{\text{R8}} \text{= 493µA ×} \frac{\text{0.5K}}{\text{1K}} \text{= 247µA}$${\text{I}}_{\text{c}} {\text{= I}}_{\text{ref}} \text{×} \frac{\text{R6}}{\text{R9}} \text{= 493µA ×} \frac{\text{0.5K}}{\text{1.5K}} {\text{= 164µA = I}}_{\text{d}}$

Here, assume that if the signal applied via the NTSC/PAL control signal input terminal is a logic high, the applied FM signal is of the PAL system, and otherwise, the applied FM signal is of the NTSC system.

When the signal applied via the NTSC/PAL control signal input terminal is a logic low, that is, the applied FM signal is of the NTSC system, then, the following currents are calculated thus:${\text{I}}_{\text{b}} {\text{= I}}_{\text{d}} \text{×} \frac{\text{R10}}{\text{R12}} \text{= 164µA ×} \frac{\text{1.5K}}{\text{1.5K}} \text{= 164µA}$${\text{I}}_{\text{source}} {\text{= I}}_{\text{a}} {\text{+I}}_{\text{b}} \text{= 247µA+164µA = 411µA}$

When the signal applied from the NTSC/PAL control signal input terminal is a logic high, that is, the applied FM signal is of the PAL system, Q13 is off. Therefore,${\text{I}}_{\text{source}} {\text{= I}}_{\text{a}} \text{=247µA}$

By AC interpretation, the operational principle of integrator 41 is as follows.

The signals of first input terminal IN1 and second input terminal IN2 are 180° out of phase. The signal supplied to the first input terminal IN1 is the same as that supplied to fourth input terminal IN4, while the signal supplied to the second input terminal IN2 is the same as that supplied to third input terminal IN3.

First, if a logic high is input to fourth input terminal IN4, fourth transistor Q4 turns on while third transistor Q3 turns off since a logic low is being input to third input terminal IN3. Accordingly, capacitor C1 is charged. At the same time, since a logic low is input to second input terminal IN2, second transistor Q2 turns off while first transistor Q1 turns on since a logic high is being input to first input terminal IN1, and thus, capacitor C2 is discharged.

Conversely, if a logic low is input to fourth input terminal IN4, fourth transistor Q4 turns off while third transistor Q3 turns on since a logic high is being input to third input terminal IN3. Accordingly, capacitor C1 is discharged. At the same time, since a logic high is input to second input terminal IN2, second transistor Q2 turns on while first transistor Q1 turns off since a logic low is being input to first input terminal IN 1, and thus, capacitor C2 is charged.

The relationship between frequency and voltage swing width can be understood from the following equation:$\text{dv =} \frac{\text{1}}{\text{C}} \text{×} \frac{{\text{I}}_{\text{source}}}{\text{dt}}$ wherein capacitance value C is 56pF.

As described in the above DC interpretation, when an NTSC signal is applied, 411µA of Isource current flows and when a PAL signal is applied, the Isource current flow is 247µA. Table 1 shows the relationship between frequency and voltage swing width in accordance with the applied FM signal by NTSC or PAL system.

**Table 1**

| | 2MHz | 3MHz | 4MHz | 5MHz | 6MHz |
|---|---|---|---|---|---|
| NTSC | 1.836V | 1.223V | 0.917 | 0.7339V | 0.6116V |
| PAL | 1.103V | 0.7351V | 0.5513V | 0.4411V | 0.3676V |

That is to say, since 0V is applied to NTSC/PAL control signal input terminal when the input signal is the FM signal of an NTSC system, the current source 421 of integrator 41 (Isource) is 411µA which is the sum of Ia and Ib. If the input signal is the FM signal of a PAL system, +5V is applied to NTSC/PAL control signal input terminal. Therefore, the current source 422 of integrator 41 (Isource) is 247µA which is equal to the value of Ia.

Consequently, in integrator 41 which is composed of capacitors C1 and C2 and first to fourth transistors Q1-Q4, the voltage swing widths are determined by the frequency. The relationship between frequency and voltage swing width as shown in Table 1 is obtained by regulating the current from the current source and the detected voltage swing value is set at about 0.8V. The detected voltage swing value is set depending on the FM band of the video signal shown in Figure 4. Therefore, a drop-out can be detected at below frequencies of 4.5MHz and 2.8MHz, in the case of NTSC and PAL systems, respectively as shown Table 1.

As described above, the frequency drop-out compensating circuit and method thereof for use with both NTSC and PAL systems have an advantage in that a drop-out for both NTSC and PAL signals can be detected and be compensated for below two predetermined frequencies by controlling the integrating current in consideration of the FM band of the NTSC and PAL systems.

The term "ground potential" (or like terms such as "ground voltage" or "earth" potential or voltage) is used conveniently in this specification to denote a reference potential. As will be understood by those skilled in the art, although such reference potential may typically be zero potential, it is not essential that it is so, and may be a reference potential other than zero.

## Claims

1. A frequency dropout compensating method for both first and second broadcast standards in an optical disk system, comprising the steps of:
determining whether an applied FM signal is a signal of the first or second standard;
detecting a frequency dropout with a frequency dropout detector (40) using integrating means (41) having first to fourth transistors (Ql to Q4) and first to fourth resistors (R1 to R4) to integrate said applied FM signal and thereby detect the frequency dropout;
characterised by varying the current supply to the integrating means (41) in accordance with the broadcast standard determined in the determining step,
the current supply being varied by an integrating current controlling means (42), which comprises a fifth transistor (Q5) whose base is connected with the base of a seventh transistor (Q7), whose collector is connected with a power supply voltage terminal (Vcc) through a fifth resistor (R5), and whose emitter is grounded through a sixth resistor (R6), a sixth transistor (Q6) whose base is connected with the collector of the fifth transistor (Q5), whose collector is tied to the power supply voltage terminal (Vcc), and whose emitter is connected with the base of the fifth transistor (Q5), the base of the seventh transistor (Q7) being grounded through a seventh resistor (R7), the collector of the seventh transistor being connected to supply current to said integrating means (41), the emitter of the seventh transistor being grounded through an eighth resistor (R8), an eighth PMOS transistor (Q8) whose source is common with the substrate and connected with the power supply voltage terminal (Vcc) and whose gate is tied to its drain, a ninth transistor (Q9) whose base is connected with the base of the seventh transistor (Q7), whose collector is connected with the drain of the eighth PMOS transistor (Q8), and whose emitter is grounded through a ninth resistor (R9), a tenth PMOS transistor (Q10) whose source is common with the substrate and connected with the power supply voltage terminal (Vcc) and whose gate is connected with the gate of the eighth PMOS transistor (Q8), an eleventh transistor (Qll) whose base is grounded through an eleventh resistor (R11), whose collector is connected with the drain of the tenth PMOS transistor (Q10), and whose emitter is grounded through a tenth resistor (R10), a twelfth transistor (Q12) whose base is connected with the collector of the eleventh transistor (Q11), whose collector is tied to the power supply voltage terminal (Vcc), and whose emitter is connected with the base of the eleventh transistor (Q11), a thirteenth transistor (Q13) whose base is connected with the emitter of the twelfth transistor (Q12), whose collector is connected with the collector of the seventh transistor (Q7), and whose emitter is grounded through a twelfth resistor (R12), and a fourteenth transistor (Q14) whose base is connected with a broadcast standard control signal input terminal through a resistor (R13), whose collector is connected with the base of the twelfth transistor (Q12), and whose emitter is grounded said step of varying the integrator current comprising setting the broadcast standard control signal either high or low, so that the current supplied to said integrating means (41) is either the collector current of said seventh transistor alone, or the sum of said collector current and the collector current of said thirteenth transistor, respectively; and further comprising the step of
compensating the frequency dropout with a dropout compensator (60) by supplying a substitute signal.

2. A frequency dropout compensating circuit for both first and second broadcast standards, comprising:
amplifying means (10, 20, 30) for amplifying an applied FM signal;
a frequency dropout detector (40) for detecting a frequency dropout in the applied FM signal, comprising integrating means (41) having first to fourth transistors (Q1 to Q4) and first to fourth resistors (R1 to R4) for integrating the FM signal generated from said amplifying means (10, 20, 30),
pulse generating means (50) for converting the frequency dropout signal detected from said amplified FM signal by said dropout detector (40) into a pulse signal;
dropout compensating means (60) for compensating a dropout when a frequency dropout for the signal generated from said pulse generating means (50) occurs;
the circuit being characterised in that it comprises integrating current controlling means (42) for controlling an integrating current in said integrating means (41), in accordance with which of said standards is to be dropout compensated by said circuit,
the integrating current controlling means comprising a fifth transistor (Q5) whose base is connected with the base of a seventh transistor (Q7), whose collector is connected with a power supply voltage terminal (Vcc) through a fifth resistor (R5), and whose emitter is grounded through a sixth resistor (R6), a sixth transistor (Q6) whose base is connected with the collector of the fifth transistor (Q5), whose collector is tied to the power supply voltage terminal (Vcc), and whose emitter is connected with the base of the fifth transistor (Q5), the base of the seventh transistor (Q7) being grounded through a seventh resistor (R7), the collector of the seventh transistor being connected to supply current to said integrating means (41), the emitter of the seventh transistor being grounded through an eighth resistor (R8), an eighth PMOS transistor (Q8) whose source is common with the substrate and connected with the power supply voltage terminal (Vcc) and whose gate is tied to its drain, a ninth transistor (Q9) whose base is connected with the base of the seventh transistor (Q7), whose collector is connected with the drain of the eighth PMOS transistor (Q8), and whose emitter is grounded through a ninth resistor (R9), a tenth PMOS transistor (Q10) whose source is common with the substrate and connected with the power supply voltage terminal (Vcc) and whose gate is connected with the gate of the eighth PMOS transistor (Q8), an eleventh transistor (Q11) whose base is grounded through an eleventh resistor (R11), whose collector is connected with the drain of the tenth PMOS transistor (Q10), and whose emitter is grounded through a tenth resistor (R10), a twelfth transistor (Q12) whose base is connected with the collector of the eleventh transistor (Q11), whose collector is tied to the power supply voltage terminal (Vcc), and whose emitter is connected with the base of the eleventh transistor (Q11), a thirteenth transistor (Q13) whose base is connected with the emitter of the twelfth transistor (Q12), whose collector is connected with the collector of the seventh transistor (Q7), and whose emitter is grounded through a twelfth resistor (R12), and a fourteenth transistor (Q14) whose base is connected with a broadcast standard control signal input terminal through a resistor (R13), whose collector is connected with the base of the twelfth transistor (Q12), and whose emitter is grounded.

3. A frequency dropout compensating method according to claim 1, or a frequency dropout compensating circuit according to claim 2, wherein said first standard is the NTSC standard.

4. A frequency dropout compensating method according to any of claims, 1 and 3, or a frequency dropout compensating circuit according to any of claims 2 and 3, wherein said second standard is the PAL standard.

5. An optical disk system provided with a circuit according to any one of claims 2 to 4.

6. An optical disk system which, in use, performs a frequency dropout method according to any one of claims 1, 3 or 4.

## Patentansprüche

1. Frequenz-Ausfall-Kompensationsverfahren für sowohl einen ersten als auch einen zweiten Sende-Standard in einem optischen Plattensystem, das die Schritte aufweist:
Bestimmen, ob ein angelegtes FM-Signal ein Signal des ersten oder zweiten Standards ist;
Erfassen eines Frequenz-Ausfalls mit einem Frequenz-Ausfalldetektor (40), der eine integrierende Einrichtung (41) verwendet, die einen ersten bis vierten Transistor (Q1 bis Q4) und einen ersten bis vierten Widerstand (R1 bis R4) besitzt, um das angelegte FM-Signal zu integrieren und dadurch den Frequenz-Ausfall zu erfassen; gekennzeichnet durch Variieren der Stromzufuhr zu der integrierenden Einrichtung (41) entsprechend dem Sende-Standard, der in dem Bestimmungsschritt bestimmt ist,
wobei die Stromversorgung durch eine einen integrierenden Strom steuernde Einrichtung (42) variiert wird, die einen fünften Transistor (Q5) aufweist, dessen Basis mit der Basis eines siebten Transistors (Q7) verbunden ist, dessen Kollektor mit einem Energieversorgungsspannungsanschluß (Vcc) über einen fünften Widerstand (R5) verbunden ist und dessen Emitter über einen sechsten Widerstand (R6) geerdet ist, einen sechsten Transistor (Q6), dessen Basis mit dem Kollektor des fünften Transistors (Q5) verbunden ist, dessen Kollektor an den Energieversorgungsspannungsanschluß (Vcc) angelegt ist und dessen Emitter mit der Basis des fünften Transistors (Q5) verbunden ist, wobei die Basis des siebten Transistors (Q7) über einen siebten Widerstand (R7) geerdet ist, wobei der Kollektor des siebten Transistors so verbunden ist, um einen Strom zu der integrierenden Einrichtung (41) zuzuführen, der Emitter an dem siebten Transistor über einen achten Widerstand (R8) geerdet ist, einen achten PMOS-Transistor (Q8), dessen Source mit dem Substrat gemeinsam ist und mit dem Energieversorgungsspannungsanschluß (Vcc) verbunden ist und dessen Gatter an sein Drain angelegt ist, einen neunten Transistor (Q9), dessen Basis mit der Basis des siebten Transistors (Q7) verbunden ist, dessen Kollektor mit dem Drain des achten PMOS-Transistors (Q8) verbunden ist und dessen Emitter über einen neunten Widerstand (R9) geerdet ist, einen zehnten PMOS-Transistor (Q10), dessen Source mit dem Substrat gemeinsam und mit dem Energieversorgungsspannungsanschluß (Vcc) verbunden ist und dessen Gatter mit dem Gatter des achten PMOS-Transistors (Q8) verbunden ist, einen elften Transistor (Q11), dessen Basis über einen elften Widerstand (R11) geerdet ist, dessen Kollektor mit dem Drain des zehnten PMOS-Transistors (Q10) verbunden ist und dessen Emitter über einen zehnten Widerstand (R10) geerdet ist, einen zwölften Transistor (Q12), dessen Basis mit dem Kollektor des elften Transistors (Q11) verbunden ist, dessen Kollektor an den Energieversorgungsspannungsanschluß (Vcc) angelegt ist und dessen Emitter mit der Basis des elften Transistors (Q11) verbunden ist, einen dreizehnten Transistor (Q13), dessen Basis mit dem Emitter des zwölften Transistors (Q12) verbunden ist, dessen Kollektor mit dem Kollektor des siebten Transistors (Q7) verbunden ist und dessen Emitter über einen zwölften Widerstand (R12) geerdet ist, und einen vierzehnten Transistor (Q14), dessen Basis mit einem Sende-Standard-Steuersignaleingangsanschluß über einen Widerstand (R13) verbunden ist, dessen Kollektor mit der Basis des zwölften Transistors (Q12) verbunden ist und dessen Emitter geerdet ist, wobei der Schritt eines Variierens des Integratorstroms ein Einstellen des Sende-Standard-Steuersignals entweder auf hoch oder niedrig aufweist, so daß der Strom, der zu der integrierenden Einrichtung (41) zugeführt ist, entweder der Kollektorstrom des siebten Transistors alleine oder die Summe des Kollektorstroms und des Kollektorstroms des dreizehnten Transistors ist, und das weiterhin den Schritt aufweist
Kompensieren des Frequenz-Ausfalls mit einem Ausfallkompensator (60) durch Zuführen eines Substitutionssignals.

2. Frequenz-Ausfall-Kompensationsschaltung für sowohl einen ersten als auch einen zweiten Sende-Standard geschaffen, der aufweist:
eine Verstärkungseinrichtung (10, 20, 30) zum Verstärken eines angelegten FM-Signals;
einen Frequenz-Ausfall-Detektor (40) zum Erfassen eines Frequenz-Ausfalls in dem angelegten FM-Signal, der eine integrierende Einrichtung (41) aufweist, die einen ersten bis vierten Transistor (Q1 bis Q4) und einen ersten bis vierten Widerstand (R1 bis R4) zum Integrieren des FM-Signals, erzeugt von der Verstärkungseinrichtung (10, 20, 30), besitzt;
eine Impulserzeugungseinrichtung (50) zum Wandeln des Frequenz-Ausfall-Signals, das von dem verstärkten FM-Signal durch den Ausfalldetektor (40) erfaßt ist, in ein Impulssignal;
eine Ausfall-Kompensationseinrichtung (60) zum Kompensieren eines Ausfalls, wenn ein Frequenz-Ausfall für das Signal, erzeugt von der Impulserzeugungseinrichtung (50), auftritt;
wobei die Schaltung dadurch gekennzeichnet ist, daß sie eine einen integrierenden Strom steuernde Einrichtung (42) zum Steuern eines integrierenden Stroms in der integrierenden Einrichtung (41) aufweist, wobei, entsprechend welcher der Standards ausgefallen ist, durch die Schaltung kompensiert wird;
wobei die den integrierenden Strom steuernde Einrichtung einen fünften Transistor (Q5) aufweist, dessen Basis mit der Basis eines siebten Transistors (Q7) verbunden ist, dessen Kollektor mit einem Energieversorgungsspannungsanschluß (Vcc) über einen fünften Widerstand (R5) verbunden ist und dessen Emitter über einen sechsten Widerstand (R6) geerdet ist, einen sechsten Transistor (Q6), dessen Basis mit dem Kollektor des fünften Transistors (Q5) verbunden ist, dessen Kollektor an den Energieversorgungsspannungsanschluß (Vcc) angelegt ist und dessen Emitter mit der Basis des fünften Transistors (Q5) verbunden ist, wobei die Basis des siebten Transistors (Q7) über einen siebten Widerstand (R7) geerdet ist, wobei der Kollektor des siebten Transistors, der mit dem Versorgungsstrom zu der integrierenden Einrichtung (41) verbunden ist, wobei der Emitter des siebten Transistors über einen achten Widerstand (R8) geerdet ist, einen achten PMOS-Transistor (Q8), dessen Source mit dem Substrat gemeinsam ist und mit dem Energieversorgungsspannungsanschluß (Vcc) verbunden ist und dessen Gatter an sein Drain angelegt ist, einen neunten Transistor (Q9), dessen Basis mit der Basis des siebten Transistors (Q7) verbunden ist, dessen Kollektor mit dem Drain des achten PMOS-Transistors (Q8) verbunden ist und dessen Emitter über einen neunten Widerstand (R9) geerdet ist, einen zehnten PMOS-Transistor (Q10), dessen Source mit dem Substrat gemeinsam und mit dem Energieversorgungsspannungsanschluß (Vcc) verbunden ist und dessen Gatter mit dem Gatter des achten PMOS-Transistors (Q8) verbunden ist, einen elften Transistor (Q11), dessen Basis über einen elften Widerstand (R11) geerdet ist, dessen Kollektor mit dem Drain des zehnten PMOS-Transistors (Q10) verbunden ist und dessen Emitter über einen zehnten Widerstand (R10) geerdet ist, einen zwölften Transistor (Q12), dessen Basis mit dem Kollektor des elften Transistors (Q11) verbunden ist, dessen Kollektor an den Energieversorgungsspannungsanschluß (Vcc) angelegt ist und dessen Emitter mit der Basis des elften Transistors (Q11) verbunden ist, einen dreizehnten Transistor (Q13), dessen Basis mit dem Emitter des zwölften Transistors (Q12) verbunden ist, dessen Kollektor mit dem Kollektor des siebten Transistors (Q7) verbunden ist und dessen Emitter über einen zwölften Widerstand (R12) geerdet ist, und einen vierzehnten Transistor (Q14), dessen Basis mit einem Sende-Standard-Steuersignaleingangsanschluß über einen Widerstand (R13) verbunden ist, dessen Kollektor mit der Basis des zwölften Transistors (Q12) verbunden ist und dessen Emitter geerdet ist.

3. Frequenz-Ausfall-Kompensationsverfahren nach Anspruch 1 oder eine Frequenz-Ausfall-Kompensationsschaltung nach Anspruch 2, wobei der erste Standard der NTSC-Standard ist.

4. Frequenz-Ausfall-Kompensationsverfahren nach einem der Ansprüche 1 und 3 oder eine Frequenz-Ausfall-Kompensationsschaltung nach einem der Ansprüche 2 und 3, wobei der zweite Standard der PAL-Standard ist.

5. Optisches Plattensystem, das mit einer Schaltung nach einem der Ansprüche 2 bis 4 versehen ist.

6. Optisches Plattensystem, das, unter Benutzung, ein Frequenz-Ausfall-Verfahren nach einem der Ansprüche 1, 3 oder 4 durchführt.

## Revendications

1. Procédé de compensation de perte de fréquence pour une première et une seconde normes de diffusion dans un système de disque optique, comprenant les étapes consistant à :
déterminer si un signal de modulation de fréquence appliqué est un signal appartenant à la première ou à la seconde norme ;
détecter une perte de fréquence à l'aide d'un détecteur de perte de fréquence (40) en utilisant un moyen d'intégration (41) ayant des premier à quatrième transistors (Q1 à Q4) et des première à quatrième résistances (R1 à R4) afin d'intégrer ledit signal de modulation de fréquence appliqué et en conséquence de détecter la perte de fréquence ;
caractérisé par la variation de l'alimentation en courant du moyen d'intégration (41) conformément à la norme de diffusion déterminée à l'étape de détermination,
l'alimentation en courant étant amenée à varier à l'aide d'un moyen de commande de courant d'intégration (42), qui comprend un cinquième transistor (Q5) dont la base est reliée à la base d'un septième transistor (Q7), dont le collecteur est relié à une borne de tension d'alimentation (Vcc) au moyen d'une cinquième résistance (R5) et dont l'émetteur est mis à la masse au moyen d'une sixième résistance (R6), un sixième transistor (Q6) dont la base est reliée au collecteur du cinquième transistor (Q5), dont le collecteur est relié à la borne d'alimentation en tension (Vcc) et dont l'émetteur est relié à la base du cinquième transistor (Q5), la base du septième transistor étant mise à la masse au moyen d'une septième résistance (R7), le collecteur du septième transistor étant relié pour alimenter en courant ledit moyen d'intégration (41), l'émetteur du septième transistor étant mis à la masse au moyen d'une huitième résistance (R8), un huitième transistor MOS à canal P (Q8) dont la source est commune avec le substrat et reliée à la borne de tension d'alimentation (Vcc) et dont la grille est reliée au drain, un neuvième transistor (Q9) dont la base est reliée à la base du septième transistor (Q7), dont le collecteur relié au drain du huitième transistor MOS à canal P (Q8) et dont l'émetteur est mis à la masse au moyen d'une neuvième résistance (R9), un dixième transistor MOS à canal P (Q10) dont la source est commune avec le substrat et reliée à la borne de tension d'alimentation (Vcc) et dont la grille est reliée à la grille du huitième transistor MOS à canal P (Q8), un onzième transistor (Q11) dont la base est reliée à la masse au moyen d'une onzième résistance (R11), dont le collecteur est relié au drain du dixième transistor MOS à canal P (Q10) et dont l'émetteur est mis à la masse au moyen d'une dixième résistance (R10), un douzième transistor (Q12) dont la base est reliée au collecteur du onzième transistor (Q11), dont le collecteur est relié à la borne de tension d'alimentation (Vcc) et dont l'émetteur est relié à la base du onzième transistor (Q11), un treizième transistor (Q13) dont la base est reliée à l'émetteur du douzième transistor (Q12), dont le collecteur est relié au collecteur du septième transistor (Q7) et dont l'émetteur est mis à la masse au travers d'une douzième résistance (R12) et un quatorzième transistor (Q14) dont la base est reliée à la borne d'entrée de signal de commande de norme de diffusion au moyen d'une résistance (R13), dont le collecteur est relié à la base du douzième transistor (Q12), et dont l'émetteur est mis à la masse, ladite étape de variation du courant d'intégrateur comprenant le positionnement du signal de commande de norme de diffusion au niveau élevé ou au niveau bas, de sorte que le courant appliqué audit moyen d'intégration (41) soit le courant de collecteur dudit septième transistor seul ou la somme dudit courant de collecteur et du courant de collecteur dudit treizième transistor, et comprenant en outre l'étape consistant à
compenser la perte de fréquence par un compensateur de perte (60) en appliquant un signal de substitution.

2. Circuit de compensation de perte de fréquence pour les première et seconde normes de diffusion, comprenant :
un moyen d'amplification (10,20,30) destiné à amplifier un signal de modulation de fréquence appliqué ;
un détecteur de perte de fréquence (40) destiné à détecter une perte de fréquence dans le signal de modulation de fréquence appliqué, comprenant un moyen d'intégration (41), ayant des premier à quatrième transistors (Q1 à Q4) et des première à quatrième résistances (R1 à R4) destinés à intégrer le signal de modulation de fréquence généré par ledit moyen d'amplification (10,20,30),
un moyen de génération d'impulsion (50) destiné à convertir le signal de perte de fréquence détecté par ledit signal à modulation de fréquence amplifié par ledit détecteur de perte (40) en un signal d'impulsion ;
un moyen de compensation de perte (60) destiné à compenser une perte lorsqu'une perte de fréquence de signal généré par ledit moyen de génération d'impulsion (50) se produit ;
le circuit étant caractérisé en ce qu'il comprend un moyen de commande de courant d'intégration (42) destiné à commander un courant d'intégration dudit moyen d'intégration (41) conforme à celle desdites normes qui doit être soumise audit circuit de compensation de perte,
le moyen de commande de courant d'intégration comprenant un cinquième transistor (Q5) dont la base est reliée à la base d'un septième transistor (Q7), dont le collecteur est relié à une borne de tension d'alimentation (Vcc) au moyen d'une cinquième résistance (R5) et dont l'émetteur est mis à la masse au moyen d'une sixième résistance (R6), un sixième transistor (Q6) dont la base est reliée au collecteur du cinquième transistor (Q5), dont le collecteur est relié à la borne d'alimentation en tension (Vcc) et dont l'émetteur est relié à la base du cinquième transistor (Q5), la base du septième transistor étant mise à la masse au moyen d'une septième résistance (R7), le collecteur du septième transistor étant relié pour alimenter en courant ledit moyen d'intégration (41), l'émetteur du septième transistor étant mis à la masse au moyen d'une huitième résistance (R8), un huitième transistor MOS à canal P (Q8) dont la source est commune avec le substrat et reliée à la borne de tension d'alimentation (Vcc) et dont la grille est reliée au drain, un neuvième transistor (Q9) dont la base est reliée à la base du septième transistor (Q7), dont le collecteur relié au drain du huitième transistor MOS à canal P (Q8) et dont l'émetteur est mis à la masse au moyen d'une neuvième résistance (R9), un dixième transistor MOS à canal P (Q10) dont la source est commune avec le substrat et reliée à la borne de tension d'alimentation (Vcc) et dont la grille est reliée à la grille du huitième transistor MOS à canal P (Q8), un onzième transistor (Q11) dont la base est reliée à la masse au moyen d'une onzième résistance (R11), dont le collecteur est relié au drain du dixième transistor MOS à canal P (Q10) et dont l'émetteur est mis à la masse au moyen d'une dixième résistance (R10), un douzième transistor (Q12) dont la base est reliée au collecteur du onzième transistor (Q11), dont le collecteur est relié à la borne de tension d'alimentation (Vcc) et dont l'émetteur est relié à la base du onzième transistor (Q11), un treizième transistor (Q13) dont la base est reliée à l'émetteur du douzième transistor (Q12), dont le collecteur est relié au collecteur du septième transistor (Q7) et dont l'émetteur est mis à la masse au moyen d'une douzième résistance (R12) et un quatorzième transistor (Q14) dont la base est reliée à la borne d'entrée de signal de commande de norme de diffusion au moyen d'une résistance (R13), dont le collecteur est relié à la base du douzième transistor (Q12), et dont l'émetteur est mis à la masse.

3. Procédé de compensation de perte de fréquence selon la revendication 1 ou circuit de compensation de perte de fréquence selon la revendication 2, dans lequel ladite première norme est la norme NTSC.

4. Procédé de compensation de perte de fréquence selon l'une quelconque des revendications 1 et 3, ou circuit de compensation de perte de fréquence selon l'une quelconque des revendications 2 et 3, dans lequel ladite seconde norme est la norme PAL.

5. Système de disque optique équipé d'un circuit selon l'une quelconque des revendications 2 à 4.

6. Système de disque optique qui, en fonctionnement, met en oeuvre un procédé lié à la perte de fréquence conforme à l'une quelconque des revendications 1, 3 ou 4.
